(19) Europäisches Patentamt
European Patent Office
Office européen des brevets

(11) EP 4 586 181 A1

(12) EUROPEAN PATENT APPLICATION

(43) Date of publication:
**16.07.2025 Bulletin 2025/29**

(21) Application number: **24151923.0**

(22) Date of filing: **15.01.2024**

(51) International Patent Classification (IPC):
***G06Q 50/50*** *(2024.01)*

(52) Cooperative Patent Classification (CPC):
**G06Q 30/01; G06N 3/044; G06N 3/045; G06N 20/00; G06Q 30/015; G06Q 30/016; G06Q 30/0202; G06Q 50/50**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Deutsche Telekom AG**
**53113 Bonn (DE)**

(72) Inventors:
- **BADA, Oualid**
  **53639 Königswinter (DE)**
- **TRINH, Thai**
  **53489 Sinzig (DE)**
- **WESSELING, Christian**
  **53227 Bonn (DE)**
- **FRANKEN, Stefan**
  **53113 Bonn (DE)**
- **NUHST, Marcel**
  **12103 Berlin (DE)**
- **GRAFENHOFER, Domenik**
  **53175 Bonn (DE)**

(74) Representative: **Vossius & Partner Patentanwälte Rechtsanwälte mbB**
**Siebertstraße 3**
**81675 München (DE)**

# (54) TRANSFORMER-BASED SEQUENCE GENERATION

(57) In an aspect of the present invention, there is provided a computer-implemented method for generation of a target token sequence based on machine learning based processing of data change events in one or more databases, the method comprising the steps of: A) detecting a plurality of data change events in the one or more databases and initializing one or more event tables with each of the detected data change events and a corresponding timestamp of the respective data change event and/or appending to the one or more event tables each of the detected data change events and a corresponding timestamp of the respective data change event; B) tokenizing the one or more event tables into an event token sequence and an event timestamp token sequence based on predefined rules and a predetermined bag of event tokens ; C) providing the event token sequence and the event timestamp token sequence to an embedding layer to generate an event embedding vector based thereon; D) providing the event embedding vector to a encoder part of a trained transformer as input and receiving a corresponding contextual embedding vector as output; E) providing the contextual embedding vector to a decoder part of the trained transformer and receiving a corresponding probability distribution for a predetermined bag of target tokens and a corresponding probability distribution from a predetermined bag of target timestamps tokens as output; F) determining a target token and timestamp based on the respective probabilities; G) initializing a target token sequence with the determined target token and the determined timestamp, and/or appending to the target token sequence the determined target token and the determined timestamp; H) providing the target token sequence to the decoder part of the trained transformer as input and repeating steps E) to G) until an end-of-sequence token has been appended to the target token sequence; and I) outputting the target sequence.

EP 4 586 181 A1

Fig. 4

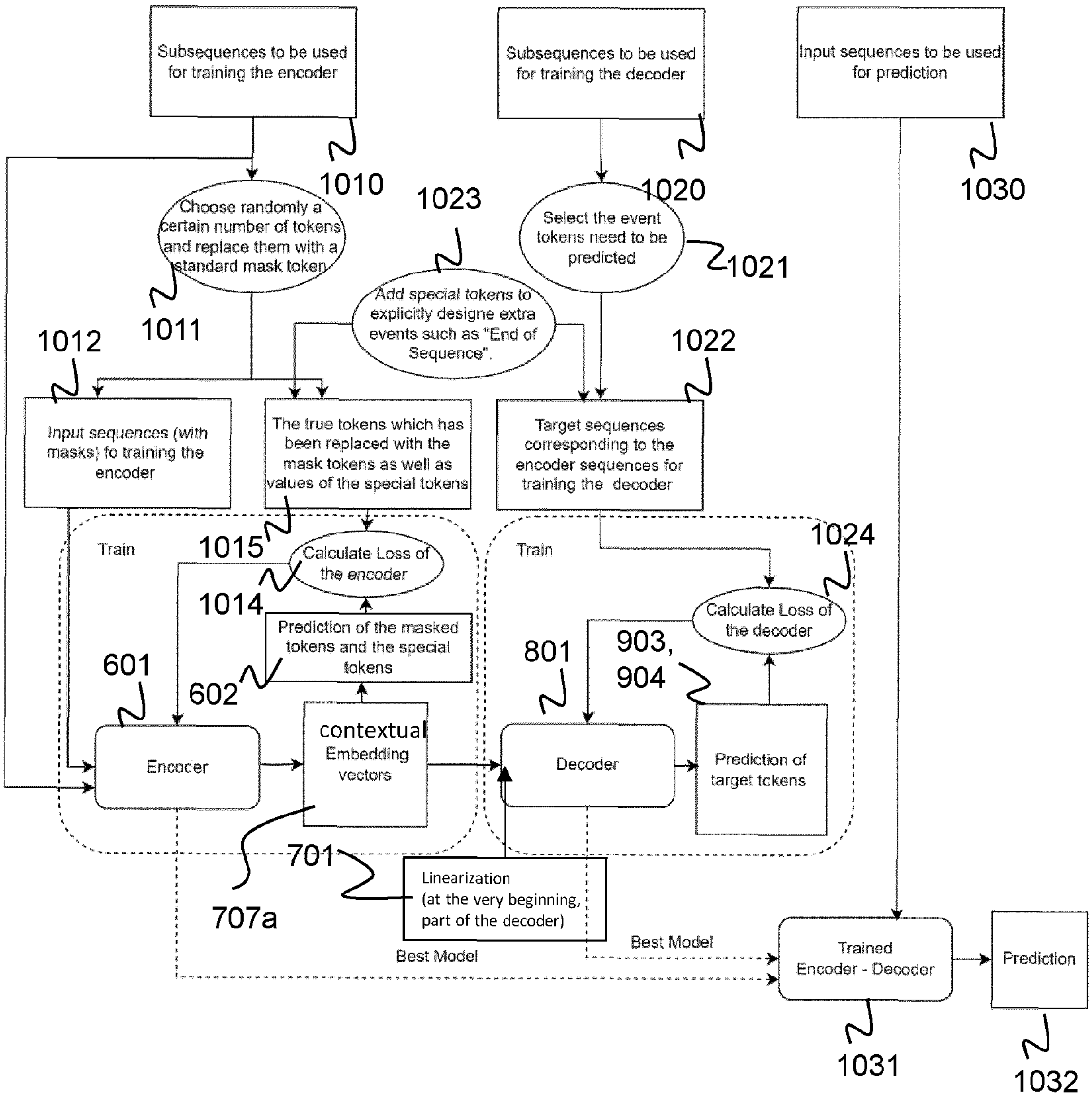
Subsequences to be used for training the encoder
1010
Subsequences to be used for training the decoder
1020
Input sequences to be used for prediction
1030
Choose randomly a certain number of tokens and replace them with a standard mask token
1011
1023
Select the event tokens need to be predicted
1021
Add special tokens to explicitly designe extra events such as "End of Sequence".
1012
1022
Input sequences (with masks) fo training the encoder
The true tokens which has been replaced with the mask tokens as well as values of the special tokens
Target sequences corresponding to the encoder sequences for training the decoder
Train
1015
Calculate Loss of the encoder
1014
Prediction of the masked tokens and the special tokens
601
602
Encoder
contextual Embedding vectors
Train
1024
Calculate Loss of the decoder
801
903, 904
Decoder
Prediction of target tokens
701
707a
Linearization (at the very beginning, part of the decoder)
Best Model
Best Model
Trained Encoder - Decoder
Prediction
1031
1032

## Description

The present invention relates to a method, in particular a computer-implemented method, and system for a machine-learning-based sequence generation and their respective use in a customer relation management system.

In detail, the present invention relates to a machine learning based method and system for generating predictions of future target events, also referred to as generating a target event sequence, from tabular historical events data, wherein the historical events data are data-change events in a data lake.

One particular use case of such method and system is a customer relation management, CRM, system which may have wide-range applications throughout various industries. However, the present invention is not limited to this specific use case. Other use cases may relate to predicting future steps of order processes, occurrences of future technical issues, extended predictive maintenance.

Unknown customer intent or misleading customer intent identification at the beginning of a customer contact process with a service support channel may lead to significant long handling time, suboptimal redirecting, a lot of call transfers in the voice channels, and thus to bad customer experience in general. In the CRM use case, embodiments of the present invention may be used to predict future customer intents, i.e., a sequence of target events.

Several technologies have been applied to identify intents during interactions with customers. For instance, standard intent identification methods employ interactive voice menus, which require customers to press key numbers or pronounce specific keywords.

More sophisticated technologies include artificial intelligence, AI, digital assistants that utilize Natural Language Understanding during customer interaction. However, these approaches often remain suboptimal, as they only consider the intent description from the customer's perspective. This may lead to overlooking important technical details and business-related aspects, which can hinder the efficient resolution of concerns.

Another disadvantage of failing to recognize predictable customer's intent in advance, is missing the opportunity to leverage automation solutions, to proactively prevent costly complications, and to enhance the frontline workforce management (e.g., by estimating the required number of agents for each specific skill).

Currently, transformer-based models are demonstrating exceptional performance in the fields of word prediction and text generation within the realm of natural language processing (NLP). In natural language processing, a "token" refers to a unit of text, often a word or a sub-word or even a character, depending on the level of granularity chosen for analysis that has been extracted from a larger corpus during the process of tokenization. For instance, the sentence "The weather is nice!" can be tokenized into the following tokens: ["The", "weather", "is", "nice", "!"].

According to the present invention, the concept transformer models is expanded beyond the domain of natural language. It is a core concept of the present invention that a "token" is constructed by combining information about a data change event, i.e., one or more of data base, table name, column name, value in the cell, and sub-workflow.

Simultaneously, the time information of tokens is collected to be considered as additional input information associated to each token. That is, in the present invention, tokenization refers to the process of creating tokens based on the tabular data.

According to the present invention, historical data change events in a data lake, including e.g., customer relation data, payment data, business task data, and device logistic data, etc., are tokenized.

Based on machine learning based, preferably transformer based, sequence generation, from said tokenized sequence of event tokens a target token sequence is generated. When used in a CRM system, from said target token sequence a future customer intent may be obtained.

Applicants have realized that the method and system of the present invention allow for efficient processing of large data lakes and precise target token sequence generation, regardless of the use case. Thus, in this description the present invention will be described in terms of a general embodiment for sequence generation and whenever necessary also the terms of a specific embodiment of a CRM will be used for improving intelligibility, especially in context of the enclosed figures.

In other words, the present invention proposes a method for a trained multi-task Large Customer Event Model (LCEM) based on neural network transformer architecture to predict a target token sequence, e.g., a future customer contact sequence with customer support channels.

The prediction may include: a) the expected contact dates, b) the intent of each contact prior to its occurrence, and c) the complexity level of the potential customer's intent, the latter of which may be inferred from the length and the content of the generated target sequence.

Furthermore, the model may be designed to predict intent categories that fit optimally to the established processes in the support service such as a) automated solutions via digital assistance or b) skill-based routing to match with experts who are skilled in specific customer topics.

Identifying context-based intents from a company standpoint prior to the customer contact allows the digital assistant channels to individualize and conduct efficient context-based dialogues with the customer right from the start. This streamlines the whole process, directing customers to the appropriate experts who can rapidly address specific concerns, or suggesting the most fitting automated solutions.

The present invention introduces key modifications to the conventional transformer models to extend their functionality beyond the linguistic domain and make use of the integrated attention mechanism with tabulated data comprising heterogeneous data types and non-textual information.

It's worth noting that business data are indeed mostly structured and predominantly stored in tabular formats. In many machine learning applications, this data is treated as a cross-sectional collection of individual attributes, overlooking the importance of sequence order. This oversight can be crucial, particularly when forecasting future customer intentions.

It is thus an object of the present invention to provide a method and system for transformer-based target token sequence generation and their respective use in a CRM system.

The above detailed problems are among those solved by the embodiment of the present invention. The invention is set out in the appended set of claims. Any references in the following description to embodiments, objects, aspects and/or examples which are not covered by the appended claims are considered as not being part of the present invention.

In an aspect of the present invention, there is provided a computer-implemented method for generation of a target token sequence based on machine learning based processing of data change events in one or more databases, the method comprising the steps of:

A) detecting a plurality of data change events in the one or more databases and initializing one or more event tables with each of the detected data change events and a corresponding timestamp of the respective data change event and/or appending to the one or more event tables each of the detected data change events and a corresponding timestamp of the respective data change event;
B) tokenizing the one or more event tables into an event token sequence and an event timestamp token sequence based on predefined rules and a predetermined bag of event tokens ;
C) providing the event token sequence and the event timestamp token sequence to an embedding layer to generate an event embedding vector based thereon;
D) providing the event embedding vector to a encoder part of a trained transformer as input and receiving a corresponding contextual embedding vector as output;
E) providing the contextual embedding vector to a decoder part of the trained transformer and receiving a corresponding probability distribution for a predetermined bag of target tokens and a corresponding probability distribution from a predetermined bag of target timestamps tokens as output;
F) determining a target token and timestamp based on the respective probabilities;
G) initializing a target token sequence with the determined target token and the determined timestamp, and/or appending to the target token sequence the determined target token and the determined timestamp;
H) providing the target token sequence to the decoder part of the trained transformer as input and repeating steps E) to G) until an end-of-sequence token has been appended to the target token sequence; and
I) outputting the target sequence.

In an embodiment of the present invention, the detecting a plurality of data change events is based on a data change trigger configured to detect the data change events based on a set of predetermined parameters; wherein the one or more event tables comprise the changed data from the one or more databases, and a timestamp of the detection of the data change event; and/or wherein the data change event tables are continuously updated.

In an embodiment of the present invention, a rule-based tokenization is used; and wherein the event token sequence is enriched by at least one special token representing a selection from:

i. start of a sequence of events
ii. start of a sub-sequence within a sequence of events
iii. end of a sub-sequence of events
iv. end-of a sequence of event
v. additional classification tokens for the whole sequence of events.

In an embodiment of the present invention, positional embedding vectors reflect the order as well as well the temporal distance between the different data-change events based on the respective time stamps; and/or wherein in the embedding layer a non-equidistant and non-strictly monotonic embedding is used.

In an embodiment of the present invention, a size of the bag of event tokens is larger, preferably much larger, than a size of the bag of target tokens; and wherein a linearization layer is employed for reducing the dimension of the contextual embedding vector from the encoder to the decoder.

In an embodiment of the present invention, the plurality of target tokens is defined based on data change events in a primary database of the one or more databases.

In an embodiment of the present invention, the encoder part and the decoder part are configured to be trained separately.

In an embodiment of the present invention, a first softmax layer is employed to allow for the encoder part to be trained separately.

In an embodiment of the present invention, a training data set is created based on a buffer date and one or more event tables with timestamps before said buffer date, wherein the one or more event tables are tokenized an event token sequence and an event timestamp token sequence based on predefined rules and a predetermined bag of event tokens; wherein the event token sequence and the event timestamp sequence are split into subsequences for training the encoder part and the decoder part; and the method further comprises: for encoder part training randomly selecting and masking token and using the prediction of the encoder part for the masked tokens to calculate the loss of the encoder part; and/or for decoder training selecting event tokens as target tokens to create a target sequence; using the prediction of the decoder part for the target tokens based on embedding vectors from the encoder part to calculate the loss of the decoder part.

In other words, the buffer date is an arbitrary, but predetermined, date chosen in the past, which helps to determine with a certain confidence whether a sequence of events has been finished or not; wherein the one or more event tables are tokenized to generate - event token sequences and event timestamp sequences based on predefined rules and a predetermined bag of event tokens; wherein the event token sequences and the event timestamp sequences are split into 2 parts: the earlier-in-time part is used for training the encoder and the later-in-time part is used for training the decoder. The method further comprises: for the encoder training, randomly selecting and masking tokens and using the predictions of the encoder for the masked tokens to calculate the loss during the encoder training; and/or for decoder training selecting event tokens as target tokens (depending on the specific use case) to create target sequences; using the predictions of the decoder for the target tokens (these predictions are created by using the embedding vectors from the encoder as one of inputs) to calculate the loss during the decoder training.

In an aspect of the present invention, the method according to any one of the preceding aspect and embodiments is used for generating a customer intent sequence; wherein the one or more databases comprise business data; wherein a primary database is a customer contact table that contains information about the contact reasons; and wherein the target tokens are intent tokens defined based on data change events in the primary database, wherein the target token sequence is a customer intent token sequence.

In an aspect of the present invention, there is provided a system for generation of a target token sequence based on machine learning based processing of data change events in one or more databases, the system comprising:

A) a data change detection unit for detecting a plurality of data change events in the one or more databases and initializing one or more event tables with each of the detected data change events and a corresponding timestamp of the respective data change event and/or appending to the one or more event tables each of the detected data change events and a corresponding timestamp of the respective data change event;

B) a tokenization unit for tokenizing the one or more event tables into an event token sequence and an event timestamp token sequence based on predefined rules and a predetermined bag of event tokens;

C) an embedding layer for receiving the event token sequence and the event timestamp token sequence and for generating an event embedding vector based thereon;

D) an encoder part of a trained transformer for receiving the embedding vector as input and outputting a contextual embedding vector;

E) a decoder part of the trained transformer for receiving the contextual embedding vector and for outputting a probability distribution for a predetermined bag of target tokens and a probability distribution from a predetermined bag of target timestamps tokens;

F) a determination unit for determining a target token and timestamp based on the respective probabilities;

G) a sequence unit for initializing a target token sequence with the determined target token and the determined timestamp, and/or appending to the target token sequence the determined target token and the determined timestamp;

H) a return unit for providing the target token sequence to the decoder part of the trained transformer as input and repeating steps E) to G) until an end-of-sequence token has been appended to the target token sequence; and

I) an output unit for outputting the target sequence.

In an aspect of the present invention, there is provided a computer program comprising instructions which, when the program is executed by a computer, cause the computer to carry out the steps of the method of any one of claims 1 to 9.

In an aspect of the present invention, there is provided a computer-readable medium comprising instructions which, when executed by a computer, cause the computer to carry out the steps of the method of any one of claims 1 to 9.

As discussed above present invention used methods of machine learning. In general, the typical definitions of this field of data processing apply. However, in addition the following definitions are provided in order to improve the intelligibility of this disclosure.

Furthermore, a transformer model, as employed in this disclosure, is a model, which is based on the transformer architecture proposed by the paper "Attention is All You Need" by Vaswani et al., 2017. The terms and definitions of this paper are used in this description and are herewith incorporated by reference.

In the context of machine learning, the term "model" can be understood as a "mathematical function" that uses input data to generate corresponding outputs or predictions. The model depends on the architecture, hyperparameters, and weights, the latter being sometimes also called coefficients or strength of connections between neurons in the context of neural networks.

The weights of a model are learned through a training algorithm. The architecture, and hyperparameters are not trained but set during an initial build or fine-tuned conventionally based on validation data (a fraction of training data that has not been used in training the weights). The model is a data processing object that may be saved, loaded, and trained. The trained model may subsequently be deployed to production, also called inference, to make predictions on new data.

How a model is constructed is often referred to as model architecture. For instance, in a neural network model, the architecture defines how many layers does the model has, how many neurons (aka units) each layer has, etc. In a Random-Forest model, for instance, the architecture defines how many trees this model contains.

A deep learning model is a type of artificial intelligence, AI, model that is designed to automatically learn and make decisions from complex data. Deep learning models are typically neural network models, which have one input layer, one output layer, and many hidden layers in between the input and the output layers. The term "deep" is used to highlight the fact that the model usually has many hidden layers, which allow to recognize complex relationships and patterns.

The term "transformer" or "transformer architecture" refers to a type of neural network architecture as proposed by Vaswani et al., 2017. The key innovation of the transformer architecture was the multi-attention mechanism, which allows the model to weigh the importance of different words in a sequence when processing each word. This mechanism enables transformers to capture long-range and complex dependencies in the data. Simultaneously, it enables parallel data processing. These advantages make transformer models highly effective for tasks involving sequential data.

A transformer model can consist of either a) only an encoder (for example BERT and BERT-family models) or b) only a decoder (for example GPT-3.5, 4 model or T5 model) or c) both encoder and decoder. An encoder-decoder transformer model is a model which uses the full transformer architecture and contains both an encoder part and a decoder part.

In embodiment of the present invention, an "encoder" is a computational unit responsible for processing input data. The encoder's role is to process an input sequence of tokens as well as their corresponding timestamps. It transforms each pair of token and timestamp into a contextual embedding vector (aka embeddings) that retains information about the specific meaning of each pair (token and timestamp) in the context of the whole input sequence token. The number of the output contextual embedding vectors corresponds to the number of the input tokens in the sequence. These context vectors are then used by the decoder to generate the output sequence.

In embodiment of the present invention, a "decoder" is a computational unit that generates an output sequence based on the encoded information from an encoder. In detail, it utilizes contextual embedding vectors, also sometimes referred to as embeddings, produced by the encoder and employs an autoregressive process for generating one element of the target sequence at a time while considering previously generated elements together with the contextual embeddings from the encoder.

The term "embedding vector" refers to a vector representation of objects or entities in a high-dimensional space. This concept is commonly used to convert categorical or discrete data into a continuous vector space, making it easier for machine learning models to understand and process such data.

The terms "embedding" and "embedding vector" may be used as equivalents. The term "Contextual embedding representation", similar to "embedding" or "vectorized embedding representation," the "contextual" underscores the embedding's ability to capture the surrounding context of a token.

In natural language processing, context plays a crucial role in distinguishing words with identical spellings but distinct meanings. For instance, consider the word "bank." In the context "I go to the bank to open a new account," it denotes a financial institution. Conversely, in the context "I walk along the river bank and enjoy the peaceful scenery," it refers to the land alongside a river, stream, or watercourse.

In embodiments of the present invention, tokenization refers to the process of creating tokens based on tabular data.

In embodiments of the present invention a distinctive mapping framework is used. Mapping in this context means tokenization and a distinctive mapping framework refers to the unique approach that is used to creating tokens from tabular data.

In embodiments of the present invention, even though the "tokens" are not natural language tokens, using contextual embedding representation helps to capture the surrounding context of a token.

Other aspects, features, and advantages will be apparent from the summary above, as well as from the description that follows, including the figures and the claims.

## Brief Description of the Drawings

Embodiments of the present invention will now be described by way of example only and with reference to the following accompanying drawings, in which

Fig. 1 shows a block diagram of a data collection according to an embodiment of the present invention;
Fig. 2a shows an encoder portion of a transformer according to an embodiment of the present invention;
Fig. 2b shows a decoder portion of the transformer according to an embodiment of the present invention;
Fig. 3. shows data preparation for the pre-training process of the encoder, training process of the decoder, as well as the prediction process of the decoder according to an embodiment of the present invention;
Fig. 4 shoes details of the data workflow processes of an encoder and a decoder training according to embodiments of the present invention;
Fig. 5 shows details of a tokenization rule according to an embodiment of the present invention;
Fig. 6 shows details of another tokenization rule according to an embodiment of the present invention;
Fig. 7 shows details of an event token sequence according to an embodiment of the present invention; and
Fig. 8 shows an enriched event token sequence according to an embodiment of the present invention.

## Detailed Description of the Drawings

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like members throughout the description.

*Data Collection*

Fig. 1 shows a block diagram of a data collection according to an embodiment of the present invention. It is an aspect of the present invention, to detect change event in one or more databases of a data lake and to generate and maintain one or more event tables with tabularized data of the event and a corresponding timestamp.

In embodiments of the present invention, a data lake is defined as one or more databases each comprising datasets with different data-types and/or different data structures. The dataset may be non-relational and/or relational dataset.

An example of databases in such a data lake is a Customer Relation Manager, CRM, database, which may contain a plurality of tables, e.g., contains a customer table, a customer contact table, and an order table, examples of which are provided below:

Customer table (Table 1)

| CustomerID | FirstName | LastName | Email |
|---|---|---|---|
| 1 | Alice | Johnson Muster | alicej@example.com |
| 2 | Bob | Smith Muster | bobs@example.com |
| 3 | Charlie | Davis Muster | charlied@example.com |

Order table (Table 2)

| OrderID | | CustomerID | Timestamp |
|---|---|---|---|
| 1 | | 3 | 2023-02-19 14:23:55 |
| 2 | | 1 | 2021-11-25 13:45:31 |
| 3 | | 3 | 2022-05-17 09:34:25 |
| | | | |
| | | | |

Customer contact table (Table 3)

| CustomerID | ContactType | Intent | Timestamp |
|---|---|---|---|
| 2 | Email | Technical problem | 2022-12-21 18:22:45 |
| 1 | Inbound call | Billing understanding | 2023-01-23 10:45:24 |
| 1 | Inbound call | Relocation | 2022-12-15 08:21 :30 |

The data change events, are collected into one or more historical event data tables, which are updated in a predefined frequency to append. This may also be referred as history event tables, or event data table in the drawings. It is noted that the data collection is starting from some initialization time point to an initial data collection as illustrated in the diagram depicted in **Fehler! Verweisquelle konnte nicht gefunden werden.** 1.

The historical event data tables may comprise the changed data from the one or more tables in one or more databases, and a timestamp of the detection of the data change event. The historical event data tables may contain essentially billions of rows and essentially dozens of columns.

According to the present invention, the data lake is scanned for changes in the data. That is, the data lake is scanned for changes in any one of the one or more databases. Preferably the scanning is performed at a predetermined frequency.

Alternatively, or additionally, the scanning process may be triggered by an event such a predetermined change in one or more of the table columns in the databases. The predetermined frequency may be defined based on the specific uses case and the frequency of the raw input data.

In a preferred embodiment a change trigger is defined and may be executed once a change event has been detected in the data lake. Preferably, the customization of the trigger is based on the requirements of each use case and can take into account aspects like data collection frequency (e.g., 5 minutes, 1 hour or 1 day), data aggregation level (e.g., customer, or combination of customer and product), and event definition (e.g., value change of a specific column within the predefined collection frequency and/or for a given aggregation level).

As detailed above, the creation of the historical event table is based on the detection of changes in the data of the data lake. In this context, *alterations* are defined changes which can be detected in the data. For example, for a certain customer with customer id = 123, the monthly bill for September 2023 was 30 € and for October 2023 was 50 €. By comparing these monthly bills, an increase of 20 € is detected. This is an example of an alteration.

In the context of tabular data, a "value" refers to a measurement of an attribute at a specific row. For example, in a table that records information about employees, a cell at the intersection of the "Employee_ID"=123 row and the "Salary" column would contain the salary value for the employee with the ID=123.

The raw tabulated data may comprise heterogeneous data types and non-textual information, which may vary widely, from floating-point values (for example amounts of money in Euros), to nominal string values, diverse temporal data types, and integers for count or class coding. Here it is noteworthy that before the tokenization is done, a preprocessing step (e.g., apply statistical binning method) could be applied to certain numeric columns, to convert them to nominal values. For example, converting the billing payments from numeric values to their empirical statistic quantiles.

The data collection frequency defines the granularity of the temporal change events and could be configurated depending on the use cases. Examples of data collection frequencies are 5 minutes, 1 hour, 1 day, 1 week, etc....

Returning to the embodiment of Fig. 1, the data lake 100 comprises a plurality of databases 101, 102, 103, 104. A change trigger S1 is executed when a data change event is detected in one or more of the databases 101, 102, 103, 104. The change trigger S1 is defined by a set of parameters 200, as has been detailed above. The change trigger S1 outputs S2 tabulated event data and a timestamp of the event.

It is noted that the timestamp may be a recorded time or a time, e.g., start or end time, of a detection time frame. That is, the term timestamp merely defines a time associated with a detected event.

In case it is determined in step S3 that the event was an initial collection, the next execution of change trigger S1 is waited for. In case it is determined in S3 that the event was not an initial collection, i.e., previous collection event data exists, the event data is appended in S4 to the event data.

That is, a continuously updated event data table 300 with respective timestamps is created and maintained.

It is noted that in preferred embodiments one or more event data tables are continuously updated.

*Tokenization*

As detailed above, in embodiments of the present invention, the application of transformer models is extended beyond the domain of natural language processing. That is, a "token" according to the present invention may be constructed by combining information about event data database, table name, column name, value in the cell, and sub-workflow. Furthermore, simultaneously, the time information of tokens is reserved. See also Fig. 5 and 6 discussed below.

In a preferred embodiment, the event data table is tokenized into unique tokens. That is, the tabulated data of each data change is converted into a string based on one or more tokenization rules. The number of possible tokens is also referred to as size of bag (of tokens). Based on a so-called vocabulary dataset an index is assigned to each possible token.

As detailed above, in a preferred embodiment of the present invention a distinctive mapping framework is used for the tokenization. As an example, the token may be a string obtained by concatenating one or more of data base name, table name, column name, and value (binned if needed).

During the tokenization, values outside the bag of tokens (e.g., new values which did not appear in the process of creating vocabulary or very rare values which preferably are ignored) as well as missing values will be first converted to specific tokens.

The rules of defining these tokens and the number of these specific tokens may be adjusted depending on the requirements of each use case. For a specific column, one can add, for instance, the suffix "_missing" and "_unknown" to the concatenated names obtained from the data base name, table name, and column name (and if necessary additional sub-workflow names) to tokenize missing values and out-of-bag tokens, respectively.

In a preferred embodiment the number of different unique tokens may be about 1000. Generally, in embodiments of the present invention, the number of unique tokens is smaller comparing to the number of unique tokens in natural language processing. This enables the model according to the present invention to be trained with limited computational resources.

Fig. 5 shows details of a tokenization rule according to an embodiment of the present invention. Here, as an example, the changes for a certain customer (with CustomerID = 123) were detected in 2 data tables. The first table is the "invoice" table, which belongs to the "finance" database (see the upper table in Fig. 5). In this table, a change happened in the column "bill". In particular, an increase of 20 € in payment was detected.

In an embodiment of the present invention, the rule A for generating token may generate the following token:

Token = DatabaseName_TableName_ColumnName_ChangedValue.

In this scenario, the generated token is "finance_invoice_bill_increased20eur". Similarly, the same rule is applied to generate the token for the second change detected in the lower table in Fig. 5. Here, the "status" in the table "delivery" inside the "logistic" database has been updated to "arrived".

In an embodiment of the present invention, the rule B for generating token may generate the following token:

Token = logistic_delivery_status_arrived.

Fig. 6 shows details of another tokenization rule according to an embodiment of the present invention. This rule is similar to the rule described with regard to Fig. 5. However, the highlighted difference here is: variables, that themselves did not change, but are directly associated to the detected changes and can be helpful for prediction, are taken into account while generating token.

As an example, let's consider the "tarif" table from "contract" database. For a certain customer (CustomerID=123), the discount condition (column "discount") has been changed. However, this happened only to one of the two products a and b of that customer. In this case, a pivoting A' of the non-changing-but-directly-relevant attribute ("product_id") is done first (see Step 1 in Fig. 6).

Afterwards, the tokenization rule B', which is similar to the one depicted in Fig. 5, is applied (see Step 2 in Fig. 6). This leads to the final token:

Token= contract_tarif_a_discount_active.

Fig. 7 shows details of an event token sequence according to an embodiment of the present invention. In detail, events a, b, c, d, and e have been detected and four different time stamps i, j, k, and t; and are tokenized. The tokenized sequence of event tokens 401 may look like

{<token e>, <token a>, <token d>, <token a>, <token d>, <token b>, <token c>};

while the corresponding timestamp token sequence 402 may look like:

{<timestamp i>,<timestamp i>,<timestamp j>,<timestamp k>,<timestamp k>,<timestamp k><timestamp t>}

However, as in natural language processing, according to the present invention the tokens are converted into numerical values based on a mapping of the vocabulary, here referred to event tokens, to numerical indexes. Thus, the event token sequence may look like (in an example using the alphabet for indexing): {5,1,4,1,4,2,3}

while the corresponding timestamp token sequence may look like:

{9,9,10,11,11,11,20}.

That is, the actual output of the tokenization is a sequence of numerical numbers, which can be processed effectively. The tokens in each sequence are represented by their respective index in a bag of tokens, also sometimes referred to as vocabulary.

Additionally, other methods known to the skilled person, may be used to optimize the design of the token sequences, e.g., padding the sequences to obtain a predetermined length.

Fig. 8 shows an enriched event token sequence according to an embodiment of the present invention. In detail, the original event token sequence 401 is enriched by adding one or more predetermined special tokens based on one or more rules indicating one or more of:

- start of a sequence of -events 404a
- start of a sub-sequence within a sequence of events 405
- end of a sub-sequence of events
- end of a sequence of events 406, also referred to as EOS.
- additional classification tokens for the whole sequence of events (e.g., the customer rating satisfaction during the sequence time.)

Preferably the adding is performed "automatically", i.e., is done non-manually, but rather based on predetermined rules to detect specific events like "sub-sequence event", "end of sequence" etc.

*Embedding*

Fig. 2a shows an encoder portion of a transformer according to an embodiment of the present invention; and Fig. 2b shows a decoder portion of the transformer according to an embodiment of the present invention. Both drawings relate to the same embodiment. Fig. 2a shows details of the encoder part and Fig. 2b shows details of the decoder part. Connection Q is the point where both drawings should be combined, when discussing the entire system.

In embodiments of the invention, the event token sequence 401 and the timestamp sequence 402 are provided to an embedding layer for generation of a corresponding embedding vector.

That is, the embedding layer is configured to convert the tokenized sequences into embedding vectors (which is actually a matrix of a shape reflecting the length of the sequence and the chosen embedding dimension). According to the present invention, the embedding layer is configured to perform a non-equidistant and non-strictly monotonic positional embedding based on the timestamp sequence being used in the embedding layer.

In NLP the input to the transformer is not the characters of the input text but a sequence of embedding vectors. Each vector represents the semantics and position of a token in the input sequence.

In embodiments of the present invention, the input to the transformer, more specifically the encoder part of the transformer, is, in addition to the token embeddings 502, positional embeddings 504, however, the position information is based on the timestamps of the data change events.

In detail, in the encoder embedding layer 500, based on the event token sequence 401, an encoder specific token indexing 501 is generated and subsequently an encoder specific input embedding 502 is generated. Furthermore, based on the timestamp token sequence 402, an encoder specific timestamp indexing 503 is generated and non-equidistant and non-strictly monotonic positional embedding 504 is performed. By combining encoder specific input embedding 502 and the non-equidistant and non-strictly monotonic positional embedding 504 the embedding vectors according to the present invention are determined.

It is noteworthy that in models for natural languages the positions are automatically assigned in a simple form of monotonic and equidistant sequence of integer numbers (0, 1, 2, ... L-1, where L is the length of the sentence).

In the present invention, a non-equidistant-and-non-strictly-monotonic-positions approach is introduced, so that the difference between two successive indexes is an integer larger or equal to 0 and not necessary 1 (e.g., 3,3,3, 5,5, 11). This is one of the general aspects in the present invention.

This generalizes the approach to be able to deal with tabular data, so that tokens, which have the same timestamp, will have the same positional embedding and successive tokens which are close to each other will have higher correlated embedding vectors compared to those that are more distant from each other. In Fig. 8, this is illustrated by the different strengths of the line's connection the tokens.

In a preferred embodiment a sin-cos positional embedding is used. As discussed above for a transformer-based model, the positions of the tokens in a sequence are needed as one of the inputs for the model. For example, consider a machine-translation model, which translates the sequence "Cats like milk" into German. A human would normally think that the input is just the sequence "Cats like milk". In fact, the model automatically assigns positions for tokens in the sequence. For example, if the tokens after the tokenization process are ["Cats", "like", "milk"] then their corresponding positions will be [0, 1, 2].

Now the sin-cos positional embedding is determined by following the approach of Vaswani et al., 2017:

$$PE_{(pos,2i)} = \sin\left(pos/10000^{2i/d_{model}}\right)$$

$$PE_{(pos,2i+1)} = \cos\left(pos/10000^{2i/d_{model}}\right)$$

Where pos is the position of a token in the sequence. pos = 0, 1, ... L-1 where L is the length of the sequence (in this case L=3) and i=0, 1, 2, ... integer(($d_{model}$-1)/2). $d_{model}$ is the embedding dimension.

The embedding dimension is the same for the tokens and for the positions so that one can sum up the token embedding and the position embedding together inside the encoder. Let's take an example of embedding dimension $d_{model}$=4. In this case i=0, 1. The positional embedding matrix for this example is calculated and shown in Table 4 below:

| tokens | positions | i=0 | i=0 | i=1 | i=1 |
|---|---|---|---|---|---|
| Cats | 0 | $PE_{(0,0)} = sin(0/10000^{2*0/4})$ | $PE_{(0,1)} = cos(0/10000^{2*0/4})$ | $PE_{(0,2)} = sin(0/10000^{2*1/4})$ | $PE_{(0,3)} = cos(0/10000^{2*1/4})$ |
| like | 1 | $PE_{(1,0)} = sin(1/10000^{2*0/4})$ | $PE_{(1,1)} = cos(1/10000^{2*0/4})$ | $PE_{(1,2)} = sin(1/10000^{2*1/4})$ | $PE_{(1,3)} = cos(1/10000^{2*1/4})$ |
| milk | 2 | $PE_{(2,0)} = sin(2/10000^{2*0/4})$ | $PE_{(2,1)} = cos(2/10000^{2*0/4})$ | $PE_{(2,2)} = sin(2/10000^{2*1/4})$ | $PE_{(2,3)} = cos(2/10000^{2*1/4})$ |

(Table 4)

It is noteworthy that the example above is shown for natural language, where the positions are automatically assigned in a form of a simple monotonic and equidistant sequence of integer numbers (0, 1, 2, ... L-1). In the present invention, non-equidistant and non-strictly monotonic positions (as explained above) are used. This is one of the unique aspects in the inventive approach.

For this purpose, the formula should be adjusted as following by replacing pos with lag(pos):

$$PE_{(pos,2i)} = \sin\left(lag(pos)/10000^{2i/d_{model}}\right)$$

$$PE_{(pos,2i+1)} = \cos\left(lag(pos)/10000^{2i/d_{model}}\right)$$

where lag(pos) refers to the lag of the timestamp position in the sequence and can be determined as an integer describing the number of time units (e.g., hour, day, etc.) between the timestamp and a reference timestamp that can be chosen according to the business use case.

An example of sin-cos positional embedding in our invention is shown in Table 5.

| tokens | timestamps | positions | lag (day) | i=0 | i=0 | i=1 | i=1 |
|---|---|---|---|---|---|---|---|
| finance_invoice_bill_increased20euros | 2022.12.05 12:30 | 0 | 0 | $PE_{(0,0)} = sin(0/10000^{2*0/4})$ | $PE_{(0,1)} = cos(0/10000^{2*0/4})$ | $PE_{(0,2)} = sin(0/10000^{2*1/4})$ | $PE_{(0,3)} = cos(0/10000^{2*1/4})$ |
| contract_tarif_a_discount_finished | 2022.10.25 00:01 | 1 | 20 | $PE_{(1,0)} = sin(20/10000^{2*0/4})$ | $PE_{(1,1)} = cos(20/10000^{2*0/4})$ | $PE_{(1,2)} = sin(20/10000^{2*1/4})$ | $PE_{(1,3)} = cos(20/10000^{2*1/4})$ |
| logistic_delivery_status_arrived | 2022.10.25 09:25 | 2 | 20 | $PE_{(2,0)} = sin(20/10000^{2*0/4})$ | $PE_{(2,1)} = cos(20/10000^{2*0/4})$ | $PE_{(2,2)} = sin(20/10000^{2*1/4})$ | $PE_{(2,3)} = cos(20/10000^{2*1/4})$ |
| crmt_contact_status_closed | 2022.10.27 16:31 | 3 | 22 | $PE_{(3,0)} = sin(22/10000^{2*0/4})$ | $PE_{(3,1)} = cos(22/10000^{2*0/4})$ | $PE_{(3,2)} = sin(22/10000^{2*1/4})$ | $PE_{(3,3)} = cos(22/10000^{2*1/4})$ |

(Table 5)

In embodiments of the present invention, replacing the increment pos variable in the sin-cos formula with lag(pos) automatically induces a higher correlation between positions that are timely closer to each other compared to those that are more distant. The closer the timestamps to each other, the higher the correlation.

*Transformer*

An encoder-decoder transformer model is a model, which uses the full transformer architecture (Vaswani et al., 2017) and contains both encode and decoder. An encoder-decoder transformer, as its name evokes, has two main components, encoder and decoder.

The encoder according to the present invention preprocesses the input sequence of tokens and timestamps into a sequence of contextual embedding vectors. From a mathematical perspective, single input sequences 401 and 402 are converted into a two-dimensional matrix (one dimension is the sequence length, another dimension is the embedding size). This matrix, which contains the historical context of each token in the input sequence 401, is now the input for the decoder.

The decoder according to the present invention uses this input to generate the target sequence (step by step, each step will generate only one target token with its timestamp). In a first step exclusively the contextual embedding of the encoder is used as input. With this a first target token and its corresponding timestamp is generated.

In a second step, and a series of further steps, in addition to the contextual embedding also the generated first token and its timestamp is used as input to generate the second token and its timestamp. This process continues till the special token "[EOS]" (End-Of-Sequence) is generated.

In embodiments of the present invention one extra linear layer in the model architecture has been added, which enables the encoder and decoder to work with different embedding sizes. Recall that the decoder deals with target tokens, e.g., costumer intent token, which have much less unique tokens than the input tokens of the encoder and therefore requires a much smaller embedding size. Standard transformer architecture only works for a homogeneous embedding size.

Moreover, for the encoder training, a linear layer and a softmax layer have been added so that the encoder can be trained alone.

How these additional layers work may be described as follows: The output of the encoder is collection of contextual embedding vectors. From mathematical perspective, this can be considered as a 2D matrix.

The first dimension of this matrix is the input sequence length, and the second dimension is the embedding size. For encoder training embodiments of the present invention focus on the contextual embedding vectors of the masked tokens.

The additional linear layer transforms the embedding dimension into the size of the bag of tokens and gives for each token a value. These values are then standardized by the softmax layer, so that their sum equals 1.

Each single value can be interpreted as probability for the corresponding token in the bag of tokens. By calculating established loss functions (e.g., cross-entropy, negative log likelihood) the model coefficients can be optimized iteratively.

The pretraining according to the present invention, enables the encoder to generate contextual embeddings independently of the decoder, taking into account all the possible events, and not only those selected as target tokens for the decoder. This empowers the encoder to create global-contextual embeddings, which could be used in various use cases.

As an example, consider the situation where the bag of tokens contains only 5 unique tokens A, B, C, D, E, the original input sequence is "B C D" and the masked input sequence is "B [MASK] D".

During training, the output of the encoder after the linear layer will be a matrix of size 3x5, where 3 is the length of the input sequence and 5 is the size of the bag of tokens. Currently focusing only on the second row of this matrix, because this row provides the prediction for the [MASK] token.

This row is an one-dimensional vector containing 5 elements. By using the softmax layer, each element will be converted to a value between 0 and 1, and their sum equals to 1. For example, this row could be [0.1, 0.2, 0.5, 0.1, 0.1].

In this case the token with the highest probability is the third token in the bag of tokens (token C). It means the predicted token is the same as the ground-truth token. In this case, the model has made a correct prediction.

Still further a second another softmax layer has been added at the output of the decoder so that the decoder is configured to predict not only tokens but also the associated timestamps. Among these two softmax layers, one softmax layer ensures that all values inside the output vector for the output tokens (this vector has the size of the bag of target tokens) are summed up to 1.

These values can be interpreted as the probabilities for all tokens in the bag of target tokens to be predicted. The final predicted token will be the one with the highest probability.

Similarly, the second softmax layer is configured to calculate the probabilities of all possible timestamp indexes. The timestamp corresponding to the timestamp index having the highest probability is returned as the predicted timestamp.

Block 601 in Fig. 2a shows a diagram of a first part of a sequence generation according to an embodiment of the present invention and block 801 in Fig. 2b shows a diagram of a second part of a sequence generation according to an embodiment of the present invention.

Starting with Fig. 1, as detailed above, in an embodiment of the present invention during data collection an event data table 300 is generated and/or continuously updated, see Fig.1. The event data table 300 comprises the data change events of the one or more databases 101, 102, 103, 104 of a data lake 100.

As shown in Fig. 3, next a tokenization 400 of the tabulated event data of the event data table 300 is performed based on a set of parameters 404 and/or a token sequence definition 403. (That is the set of parameters 404 may include the token sequence definition 403) The tokenization 400 outputs an event token sequence 401 and an event timestamp sequence 402.

Said sequences are provided to an encoder embedding layer 500 (see Fig. 2a). As discussed above an embedding vector 505 is generated based on the input event token sequence 401 and an event timestamp sequence 402.

In Fig. 2a, the embedding vector 505 is provided to an encoder transformer block 1050 of a trained encoder (training is detailed below). Encoder 601 has been trained to output a contextual embedding 700.

That is, the contextual embeddings 700 according to the present invention capture hence both the specifics of events and their contextual significance. Thanks to the multi-attention mechanism of the encoder transformer block 1050, they also provide deeper insights, such as those related to the extra tokens that assess sequence termination likelihood, or the presence of relevant sub-sequences that could be crucial for predicting future patterns.

In an embodiment of the present invention the output contextual embedding 700 is input to linearization layer 701 (Fig. 2b) to adjust the input embedding dimension to the target embedding dimension. The output after the linear layer 701 is referred to as "linearized contextual embedding" and it is denoted by 707a in Fig. 2b.

As discussed before, the transformer is operated in an autoregressive mode. That is, in a first run, only the linearized contextual embedding 707a from the encoder 601 is input into the decoder 801. In any further run, the previously determined target token (discussed below) is included in the input contextual embedding 707b.

As discussed above, the encoder is configured and trained to output a probability 901 for each possible target token of a bag of target tokens and a probability 902 for each possible timestamp token (Fig. 2b).

In embodiments of the present invention the target token 903 and the corresponding timestamp 904 are determined based on the aforementioned probabilities (901 and 902). In a preferred embodiment, the most probable token and timestamp are determined (greedy decoding).

Alternatively, other methods such as beam-search decoding or minimum-bayes-risk decoding may be used. Beam-search and minimum-bayes-risk decoding methods may generally lead to better predictions, but they require also much higher computational resources.

In step S5 (see Fig. 2b) it is determined, whether the obtained token is an end of sequence, EOS, token. In case an EOS token has been obtained, the loop is ended and the target sequence 907 (Fig. 2b) is output.

In case no EOS token has been predicted, the current obtained target token and the current obtained timestamp are appended into the previously obtained target token sequence and target timestamp sequence (if they exist). These appending processes are denoted by 905 and 906 in Fig. 2b. These two sequences are then passed into the block 702 to generate the decoder embedding 707b. In other words, the obtained target token and the obtained timestamp are appended to the target token sequence (or said sequence is initiated).

In order to understand the structural differences between the methods and system of Polosukhin et al, 2017, and the embodiments of the present invention a direct comparison is shown in Figs. 2a and 2b.

All blocks with diagonal hatching in Figs.2a and 2b differ from the prior art embodiments. It is noted that the data-flow arrows inside the transformer blocks (reference signs 1050 and 1051), which are similar to the ones of Polosukhin et al, 2017are not shown in detail for simplicity.

In detail, at the encoder input the embodiments differ in an encoder specific timestamp indexing 503 and a non-equidistant and non-strictly monotonic positional embedding 504.

In standard transformer-based language models, the positions are implicitly assigned to each token based on their orders in the sentence. These positions are therefore equidistant and strictly monotonic starting from 0 to L-1, where L is the length of the sentence (for example 0, 1, 2, 3, ...).

In the present invention, the positions are defined based on the lag of the timestamp relatively to a certain reference timestamp and therefore could be non-equidistant and non-strictly monotonic (for example 12, 12, 12, 18, 19, 35, 35, ...). These positions are then converted into embedding vectors using the sin-cos positional embedding method, which is explained in detail above (see Tab. 4, Tab. 5 and the describing passages).

This captures the dependency according to their distances to each other and to the reference timestamp. Doing so the embedding vectors of tokens having the same timestamp will be highly correlated, whereas those which have distant timestamps will be less correlated. In other words, the closer the timestamps to each other, the higher the correlation.

Similarly, at the decoder input the embodiments differ in a decoder specific timestamp indexing 705 and a non-equidistant and non-strictly monotonic positional embedding 706. The differences and the technical effects have been described above.

Furthermore, the encoder comprises a linearization layer 701a and a softmax layer 702a (Fig. 2a) to allow for independent training of the encoder part 601 (described below).The linearization layer 701-a contains trainable parameters that are used to transform linearly the contextual embedding vectors to final vectors. The latter are used as input vectors in the softmax layer 702a to determine the most likely token, that has been masked during the training. In Fig. 2a, the combination of these 2 layers (701a and 702a) is also denoted by 601a. This block 601a is only used during the pretraining phase of the encoder.

Still further, in embodiment of the present invention a linearization layer 701 is provided between the encoder 601 and the decoder 801 or preferably in the decoder. The linearization layer 701 is preferably provided inside the decoder, because the parameters of that layer are "learnt" during the training process as well. The decoder is configured to predict specific targets, often represented by a few target tokens.

Therefore, its internal embedding dimension can be more compact compared to the encoder's embedding dimension, which handles more general and complex contexts. The linearization layer 701 is preferred to align the size of the contextual embedding vectors from the decoder with the decoder's embedding size. This allows the system to work even with different embedding sizes in the encoder and decoder.

Finally, also at the end of the decoder 801 a further softmax layer 802 (in addition to the standard softmax layer 802a for determining token probabilities) is provided to determine the probability of the next timestamp. In the original solution the next timestamp is simply the next word index. This extension is crucial not just for business applications but also for technical improvements in predicting the entire sequence of target tokens. Specifically, the predicted timestamp is employed autoregressively as an extra input in the decoder, aiding in the iterative prediction of the remaining target token sequence.

*Target events (in the CRM use case: Intent events)*

In embodiments of the present invention, intent events are predetermined events, which can be associated with customer contacts in the datalake, usually collected from the customer relation management data base, more precisely, from the customer contact table that contains information about the contact reasons

That is, intents refer to the purposes of customers when they contact a customer support service. For example, a customer has realized that his/her monthly bill has been increased by 20 Euros and has called to ask for an explanation. In this scenario, the customer's intent is categorized as "Billing Understanding" (Further explanation is also given in the *Tokenization* section ).

Preferably, a cleaning step can be applied to have unique and disjunct intents to empower the learning process of the decoder. For example, contact reason "negative account balance" and contact reason "account credit" could be consolidated into one intent "account balance".

Other use cases may relate to predicting future steps of order processes, occurrences of future technical issues, extended predictive maintenance. For these use cases, the tokenization rules for the target tokens could be configured differently.

*Training Phase*

In an embodiment of the present invention the encoder and decoder are trained separately. The separate training of the encoder enables the encoder to generate contextual embeddings independently of the decoder, taking into account all event types, and not only those selected as target tokens for the decoder. This empowers the encoder to create global-contextual embeddings, which could be used in various other use cases.

In an embodiment of the present invention, the encoder and decoder are initially trained on a historical event data table and/or further continuously trained on the continuously updated historical event data table 300 (See Fig. 1 and Fig. 3).

The data amount required for training depends on the model complexity, which is often reflected by the choice of hyperparameters and the size of the bag of tokens. Note that a bag of tokens according to the present invention generally has a much smaller size compared to natural language processing, which is beneficial for training models even with limited computational resources.

Regarding the retraining, this process can be trigged automatically by monitoring the model performance and/or setting an accuracy threshold.

Fig. 3. describes the data preparation for the pre-training process of the encoder, training process of the decoder, as well as the prediction process of the decoder. Tabular historical event data and their associated timestamps 300 are first tokenized 400. This produces sequences of tokens and sequences of corresponding timestamps (401 & 402). Depending on the collection mode (train or prediction, which is defined in step S6) the data will be processed accordingly.

For the training mode of the encoder, a buffer reference date 1001, which is sufficiently far in the past is introduced. Next, the data which happened before this buffer reference date 1002 is selected. The data buffer allows to define if a sequence has finished or not. As next step, reference timestamps 1003 are selected, which allow to split the selected data from the previous step into 2 parts. The splitting process is denoted by 1004 in Fig. 3. After the splitting process, the earlier-in-time part is further used for training the encoder. They are the input sequences with masks 1010. The later-in-time part (after the splitting process) 1020 is used for training the decoder.

For the prediction mode, from step S6, we select the sequences for which the timestamps are located within the predefined decoder time window (1007). They are the input sequences without masks for the prediction of the decoder (1030).

Fig. 4 describes in more detail the data workflow processes. In particular, it describes how the labels for training the encoder and decoder are created, are denoted by 1011, 1021. The rule-based tokens generated at these steps are augmented with special tokens as described in 1023 to prepare the input sequences for training the encoder and decoder respectively.

During the training process of the encoder, the input sequences with masked tokens 1012 are used as input. The sequences with only ground-truth tokens 1015 are used as label. The model is configured to predict the masked tokens. By comparing the predicted tokens 602 with the ground-truth tokens, the loss 1014 is calculated. This loss is used to optimize the model coefficients during the training process.

During the training process of the decoder, the input sequences without masks 1010 is used as input and the target sequences 1022 are used as target. It is noted that depending on the specific use case, we select only use-case relevant tokens to form the target sequences. The selecting process is denoted by 1021 in Fig. 4. The input sequences 1010 first go through the pretrained encoder. This outputs the contextual embedding vectors, which are then the inputs of the decoder.

The decoder learns to predict the target sequences. The predicted target sequences 1032 are compared with the ground-truth target sequences and based on that the loss 1024 is calculated, which is used to optimize the model coefficients. Note that optionally the pretrained encoder could also be further fine-tuned during the training process of the decoder.

For the prediction process, discussed below, of the decoder, the pretrained encoder and the trained decoder are used together as a combination 1031. Now the input sequences 1030 are used as input for this combined-model and the predictions are generated in an autoregressive approach.

To create training data for the encoder and decoder, first a buffer date 1001 is chosen that is sufficiently far in the past. The choice of the buffer date depends on the use case. In a preferred embodiment, a buffer date of 60 days for the CRM use case is chosen. In general, the buffer date may be chosen based on ensuring a valid assessment of the end of sequence concept.

Then randomly reference timestamps prior to this buffer date are selected (1002) to split the historical event sequences into input sequences for training the encoder 1010 and target sequences for training the decoder 1020 according to predefined time span parameters also referred to as time windows in 1005 and 1006 of the decoder and encoder, respectively. In a preferred embodiment 30 days for both are chosen. This can be adjusted depending on the use case and the model performance.

All tokens associated with their timestamps inside the time windows prior to the reference timestamp are considered as input sequence for the encoder. The tokens occurring inside the time window after the reference timestamps are used to create the target tokens for the decoder training.

Here it is important to note that in general it is not necessary to select all tokens as target tokens for the decoder. Depending on the specific use case, only a subset of relevant tokens may be selected. In our use case, only the customer intent tokens are considered.

*Pre-training:*

During the training phase first the encoder is pre-trained. For this training random tokens (about 20%) are masked and replaced with a specific [MASK]-token.

The masked sequences as well as the additional special tokens (such as "[CLS], [SEP], and [EOS]") are predicted during the training and compared to the values of the true tokens. This allows to calculate the loss function, which is needed to optimize the model coefficients iteratively.

The pretrained encoder can hence generate a contextual embedding vector for each input token in the sequence.

*Full Training*

During the full training, the encoder first converts the input sequence into contextual embedding vectors. Note that in this phase, it is possible to further train and optimize the encoder, but this is not necessary.

The contextual embedding vectors now serve as input for the decoder. The decoder uses this input to generate the target sequence (tokens and their corresponding timestamps) step by step. At each step, only one single target token and its timestamp are generated. The generated target tokens are compared to the true target tokens. Simultaneously, the generated timestamp is also compared to the true timestamp. These 2 comparisons allow for the calculation of the loss function, which is used to optimize the model coefficients.

*Prediction Phase*

In summary, at the very first step of the generation process, only the input sequence is needed as input. This input sequence goes into the encoder and will be converted into a contextual embedding vector (matrix). The decoder uses the embedding to generate the first target token.

At the second step of the generation process, the generated first token will be used, additionally to the contextual embedding vector (encoder output) to generate the second target token.

At the third step, the generated first and second tokens will be used, additionally to the contextual embedding vector to generate the third target token.

This process continues until the End-Of-Sequence ([EOS]) token is obtained

In detail, the prediction process generates sequences of tokens and timestamps 1032 step by step. In each step, the trained encoder and trained decoder are used together to generate probabilities (thanks to the softmax layers) for each token and each possible timestamp index (in the set of all possible time indexes).

Choosing the most likely token and the most likely timestamp index (based on the highest probabilities) determines the predicted token and its associated timestamp. In the next prediction step, these selected token and selected timestamp are used as additional input (additionally to the encoder output) for the decoder to predict the next target token associated with its timestamp.

This generative process continues until the highest probability is allocated to the End-Of-Sequence token. That is how the customers' intents and their expected contact dates are predicted.

In the CRM use case the transformer according to the present invention, once trained using specific data granularity (e.g., an input data set for each customer or each customer-product combination), can continuously predict future target sequences with the same level of granularity (i.e., a prediction for each customer or each customer-product combination, respectively).

This process requires consistently collecting the most recent data changes, beginning from the present and going back through a pre-defined time window, as established during the training phase, c.f. the buffer date.

The diagram in Fig. 1 depicts how according to the present invention the data changes are detected continuously in the data lake and how said changes are appended in association with their timestamps to an initialized historical event data base.

The frequency of updating the predictions can be set depending on the business requirements and the update frequency of the input raw data. Once new changes in the data lake are detected, the model can accordingly update its predictions.

Alternatively, one can work with a batch strategy in which a fixed running frequency is scheduled and applied to update all the predictions in a regular basis (e.g., each hour, or each, day, or each week, etc.).

When the prediction mode is on, the most recent historical event data collected in unit 300 (See Fig. 1 and Fig. 3) and tokenized according to the tokenization parameters 404 in Fig. 3, is selected for the predefined time window of the encoder as described in 1007 in Fig. 3. The output of this sub-process is a set of (unmasked) input sequences, in which each token is associated with its timestamp.

An example of such sequences is a set of tokens indicating the reasons of the recent previous contacts of a customer with the hotline service associated with their occurrence timestamps.

These are preprocessed in unit 500 (Fig. 2a) to generate general embedding vectors for each input token associated with its timestamp. The encoder transformer block 1050 applies a multi-attention mechanism to transform the general embeddings to specific contextual embedding vectors capturing the meaning of the whole sequence.

The contextual embedding vectors of the encoder are then used as input vectors for the decoder transformer block 1051 to generate more specific embeddings focusing more and more on the aspects relevant to predict of the next most likely target token and its corresponding timestamp using the softmax layers of the decoder.

An output example of the decoder part can be hence a token indicating the intent of a future customer contact. The second softmax layer 802 delivers additionally the timestamp of this predicted contact.

These are preprocessed in unit 500 (see Fig. 2a) to create general embedding vectors for each input token and its associated timestamp. The encoder transformer block 1050 uses a multi-attention mechanism to transform these general embeddings into specific contextual embedding vectors.

Then, these contextual embeddings from the encoder are input into the decoder transformer block 1051. This block generates more focused embeddings, honing in on aspects crucial for predicting the next likely target token and its timestamp, utilizing the decoder's softmax layers.

An example output from the decoder could be a token indicating a future customer contact's intent. The second softmax layer 802 additionally predicts the timestamp of this customer contact. In a second step, this output is used in addition to the encoder contextual embedding vectors as input for generating more and more focused embeddings, increasingly honing in on aspects crucial for predicting the next likely target token and its timestamp in the target sequence.

In the above embodiment this could be a second contact initiated by the customer with the same intent. The process will be then repeated until an "end-of-sequence" token is generated.

Furthermore, by looking at the intents and the expected contact dates for a certain period of time, the embodiments can also anticipate the complexity level of an issue . For example, if the model predicts that a customer will contact the customer service 5 times in the next 5 days and all 5 intents are relevant to the same issue, then this is likely a very complex issue.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure.

Such persons would understand, however, that the present disclosure is not restricted to the illustrated example architectures or configurations but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof.

The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according to embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**List of reference numerals**

| | |
|---|---|
| 100 | data lake |
| 101 | database |
| 102 | database |
| 103 | database |
| 104 | database |
| 200 | set of parameters |
| S1 | change trigger |
| S2 | output tabulated event data |
| S3 | determination step |
| S4 | appending to event data |
| S5 | EOS determination |
| S6 | mode selection |
| 300 | data collection unit |
| 400 | tokenization unit |
| 401 | event token sequence/input token sequence |
| 402 | timestamp sequence |
| 404 | tokenization process parameters |
| 404a | start of sequence token |
| 405 | subsequence separator token |
| 406 | end of sequence |
| 500 | embedding layer |
| 501 | encoder specific token indexing |
| 502 | encoder specific input embedding |
| 503 | encoder specific timestamp indexing |
| 504 | positional embedding |
| 505 | embedding vector |
| 601 | encoder |
| 601a | encoder pretrain extension |
| 602 | predicted token |
| 700 | contextual embedding |
| 701 | linearization layer |
| 701a | linearization layer |
| 702a | softmax layer |

| | |
|---|---|
| 702 | decoder embedding layer |
| 703 | decoder specific target token indexing |
| 704 | decoder specific input embedding |
| 705 | decoder specific timestamp indexing |
| 706 | decoder positional embedding |
| 707b | input contextual embedding |
| 707a | linearized contextual embedding |
| 801 | decoder |
| 802 | first softmax layer |
| 802a | second softmax layer |
| 901 | target token probability |
| 902 | timestamp token probability |
| 903 | target token |
| 904 | timestamp token |
| 905 | Appending process |
| 906 | Appending process |
| 907 | target sequence |
| 1001 | buffer date |
| 1002 | data selection |
| 1003 | reference timestamp selection |
| 1004 | data splitting |
| 1005 | time window of the encoder |
| 1006 | time window of the decoder |
| 1007 | selection of time window |
| 1010 | sequences for training the encoder |
| 1011 | label for encoder training |
| 1012 | masked tokens |
| 1014 | loss calculation encoder |
| 1015 | ground truth token |
| 1020 | sequences for training the decoder |
| 1021 | label for decoder training |
| 1022 | target sequences |
| 1023 | enrichment with special tokens |
| 1024 | loss calculation decoder |
| 1030 | sequences without masks |
| 1031 | combination of trained models |
| 1032 | sequences of tokens and timestamps |
| 1050 | encoder transformer block |
| 1051 | decoder transformer block |
| A | tokenization rule |
| B | tokenization rule |
| A' | tokenization rule |
| B' | tokenization rule |
| Q | Data connection between Fig. 2a and 2b |

## Claims

**1.** A computer-implemented method for generation of a target token sequence based on machine learning based processing of data change events in one or more databases, the method comprising the steps of:

A) detecting a plurality of data change events in the one or more databases and initializing one or more event tables with each of the detected data change events and a corresponding timestamp of the respective data change event and/or appending to the one or more event tables each of the detected data change events and a corresponding timestamp of the respective data change event;

B) tokenizing the one or more event tables into an event token sequence and an event timestamp token sequence based on predefined rules and a predetermined bag of event tokens ;

C) providing the event token sequence and the event timestamp token sequence to an embedding layer to generate an event embedding vector based thereon;

D) providing the event embedding vector to a encoder part of a trained transformer as input and receiving a corresponding contextual embedding vector as output;
E) providing the contextual embedding vector to a decoder part of the trained transformer and receiving a corresponding probability distribution for a predetermined bag of target tokens and a corresponding probability distribution from a predetermined bag of target timestamps tokens as output;
F) determining a target token and timestamp based on the respective probabilities;
G) initializing a target token sequence with the determined target token and the determined timestamp, and/or appending to the target token sequence the determined target token and the determined timestamp;
H) providing the target token sequence to the decoder part of the trained transformer as input and repeating steps E) to G) until an end-of-sequence token has been appended to the target token sequence; and
I) outputting the target sequence.

**2.** Method according to claim 1,

wherein the detecting a plurality of data change events is based on a data change trigger configured to detect the data change events based on a set of predetermined parameters;
wherein the one or more event tables comprise the changed data from the one or more databases, and a timestamp of the detection of the data change event; and/or
wherein the data change event tables are continuously updated.

**3.** Method according to claim 1 or claim 2,

wherein a rule-based tokenization is used; and
wherein the event token sequence is enriched by at least one special token representing a selection from:

i. start of a sequence of events
ii. start of a sub-sequence within a sequence of events
iii. end of a sub-sequence of events
iv. end-of a sequence of event
v. additional classification tokens for the whole sequence of events.

**4.** Method according to any one of claims 1 to 3,

wherein positional embedding vectors reflect the order as well as well the temporal distance between the different data-change events based on the respective time stamps; and/or
wherein in the embedding layer a non-equidistant and non-strictly monotonic embedding is used.

**5.** Method according to any one of claims 1 to 4,

wherein a size of the bag of event tokens is larger, preferably much larger, than a size of the bag of target tokens; and
wherein a linearization layer is employed for reducing the dimension of the contextual embedding vector from the encoder to the decoder.

**6.** Method according to any one of claims 1 to 5, wherein the plurality of target tokens is defined based on data change events in a primary database of the one or more databases.

**7.** A method for training a transformer of any one of claims 1 to 6, wherein the encoder part and the decoder part are configured to be trained separately.

**8.** Method according to claim 7, wherein a first softmax layer is employed to allow for the encoder part to be trained separately.

**9.** Method according to claim 7 or 8,

wherein a training data set is created based on a buffer date and one or more event tables with timestamps before said buffer date;
wherein the one or more event tables are tokenized an event token sequence and an event timestamp token sequence based on predefined rules and a predetermined bag of event tokens;
wherein the event token sequence and the event timestamp sequence are split into subsequences for training the encoder part and the decoder part; and
the method further comprises:

for encoder part training randomly selecting and masking token and using the prediction of the encoder part for the masked tokens to calculate the loss of the encoder part; and/or
for decoder training selecting event tokens as target tokens to create a target sequence; using the prediction of the decoder part for the target tokens based on embedding vectors from the encoder part to calculate the loss of the decoder part.

**10.** Use of the method according to any one of claims 1 to 6 for generating a customer intent sequence;

wherein the one or more databases comprise business data;
wherein a primary database is a customer contact table that contains information about the contact reasons; and
wherein the target tokens are intent tokens defined based on data change events in the primary database,
wherein the target token sequence is a customer intent token sequence.

**11.** A system for generation of a target token sequence based on machine learning based processing of data change events in one or more databases, the system comprising:

A) a data change detection unit for detecting a plurality of data change events in the one or more databases and initializing one or more event tables with each of the detected data change events and a corresponding timestamp of the respective data change event and/or appending to the one or more event tables each of the detected data change events and a corresponding timestamp of the respective data change event;
B) a tokenization unit for tokenizing the one or more event tables into an event token sequence and an event timestamp token sequence based on predefined rules and a predetermined bag of event tokens;
C) an embedding layer for receiving the event token sequence and the event timestamp token sequence and for generating an event embedding vector based thereon;
D) an encoder part of a trained transformer for receiving the embedding vector as input and outputting a contextual embedding vector;
E) a decoder part of the trained transformer for receiving the contextual embedding vector and for outputting a probability distribution for a predetermined bag of target tokens and a probability distribution from a predetermined bag of target timestamps tokens;
F) a determination unit for determining a target token and timestamp based on the respective probabilities;
G) a sequence unit for initializing a target token sequence with the determined target token and the determined timestamp, and/or appending to the target token sequence the determined target token and the determined timestamp;
H) a return unit for providing the target token sequence to the decoder part of the trained transformer as input and repeating steps E) to G) until an end-of-sequence token has been appended to the target token sequence; and
I) an output unit for outputting the target sequence.

**12.** Computer program comprising instructions which, when the program is executed by a computer, cause the computer to carry out the steps of the method of any one of claims 1 to 9.

**13.** A computer-readable medium comprising instructions which, when executed by a computer, cause the computer to carry out the steps of the method of any one of claims 1 to 9.

Fig. 1

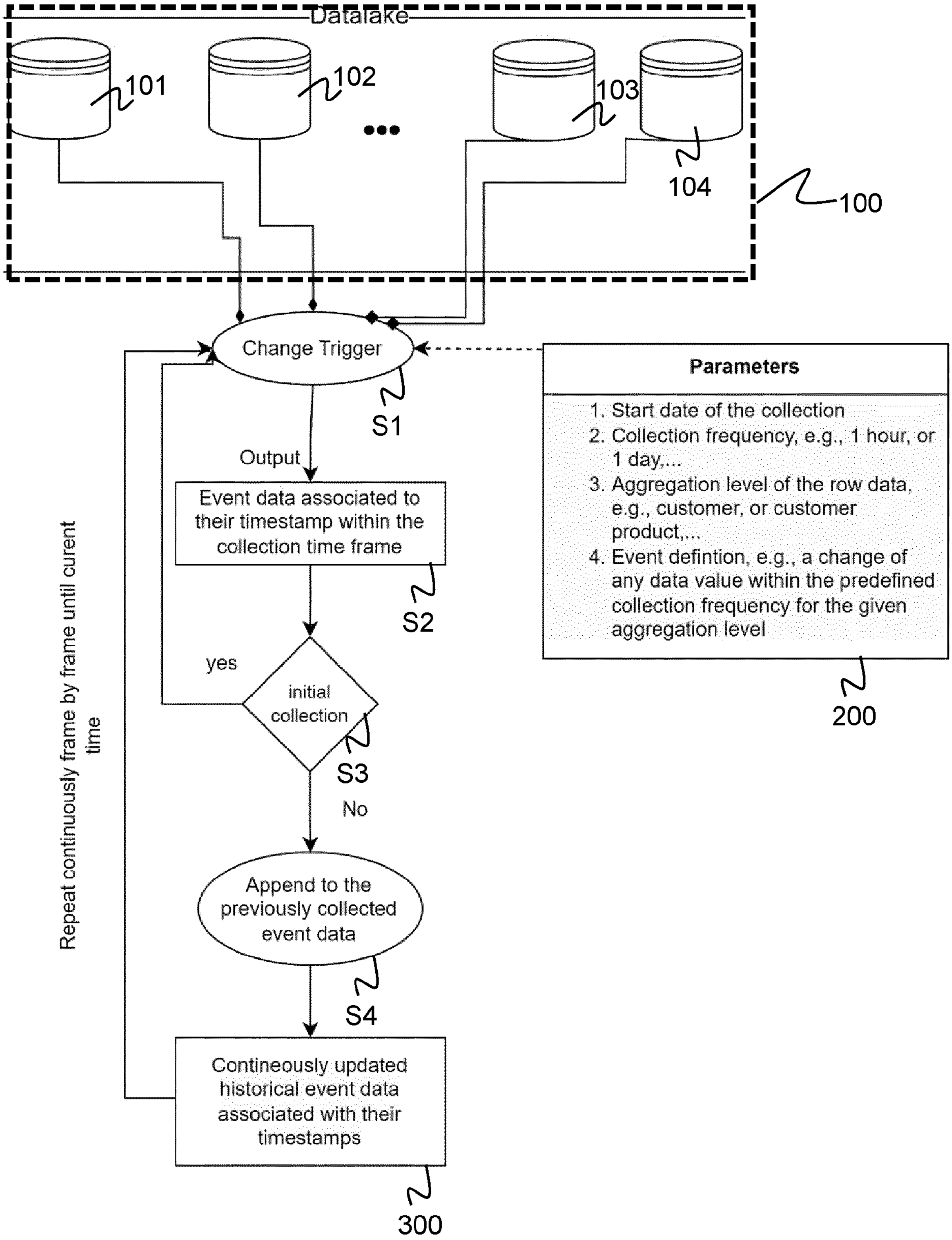
Datalake
101
102
•••
103
104
100
Change Trigger
S1
Output
Event data associated to their timestamp within the collection time frame
S2
yes
initial collection
S3
No
Append to the previously collected event data
S4
Contineously updated historical event data associated with their timestamps
300
Repeat continuously frame by frame until curent time
Parameters
1. Start date of the collection
2. Collection frequency, e.g., 1 hour, or 1 day,...
3. Aggregation level of the row data, e.g., customer, or customer product,...
4. Event defintion, e.g., a change of any data value within the predefined collection frequency for the given aggregation level
200

# Fig. 2a

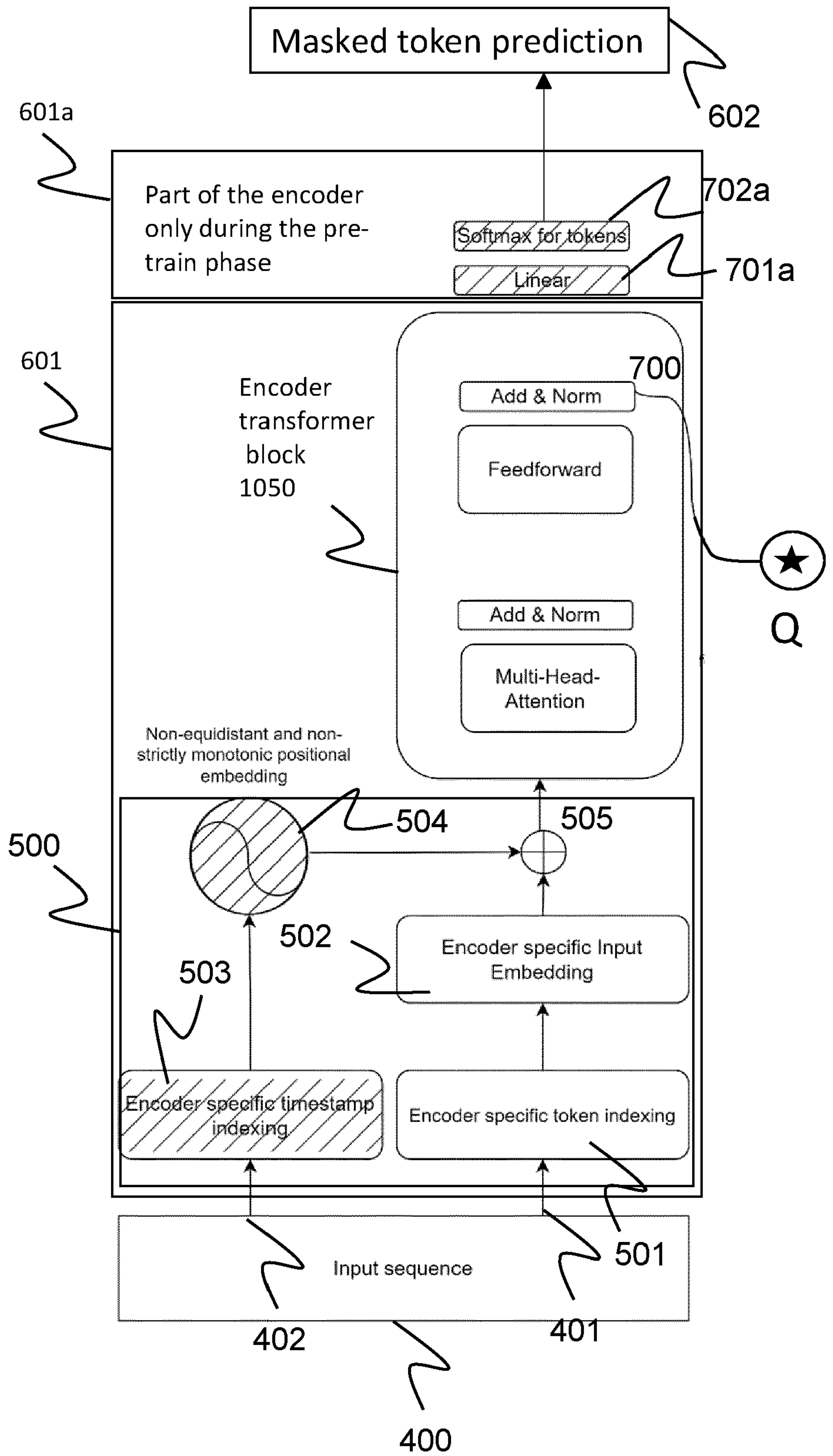
Masked token prediction
602
601a
Part of the encoder only during the pre-train phase
702a
Softmax for tokens
Linear
701a
601
Encoder transformer block 1050
700
Add & Norm
Feedforward
Add & Norm
Multi-Head-Attention
Q
Non-equidistant and non-strictly monotonic positional embedding
504
505
500
502
Encoder specific Input Embedding
503
Encoder specific timestamp indexing
Encoder specific token indexing
501
Input sequence
402
401
400

Fig. 2b

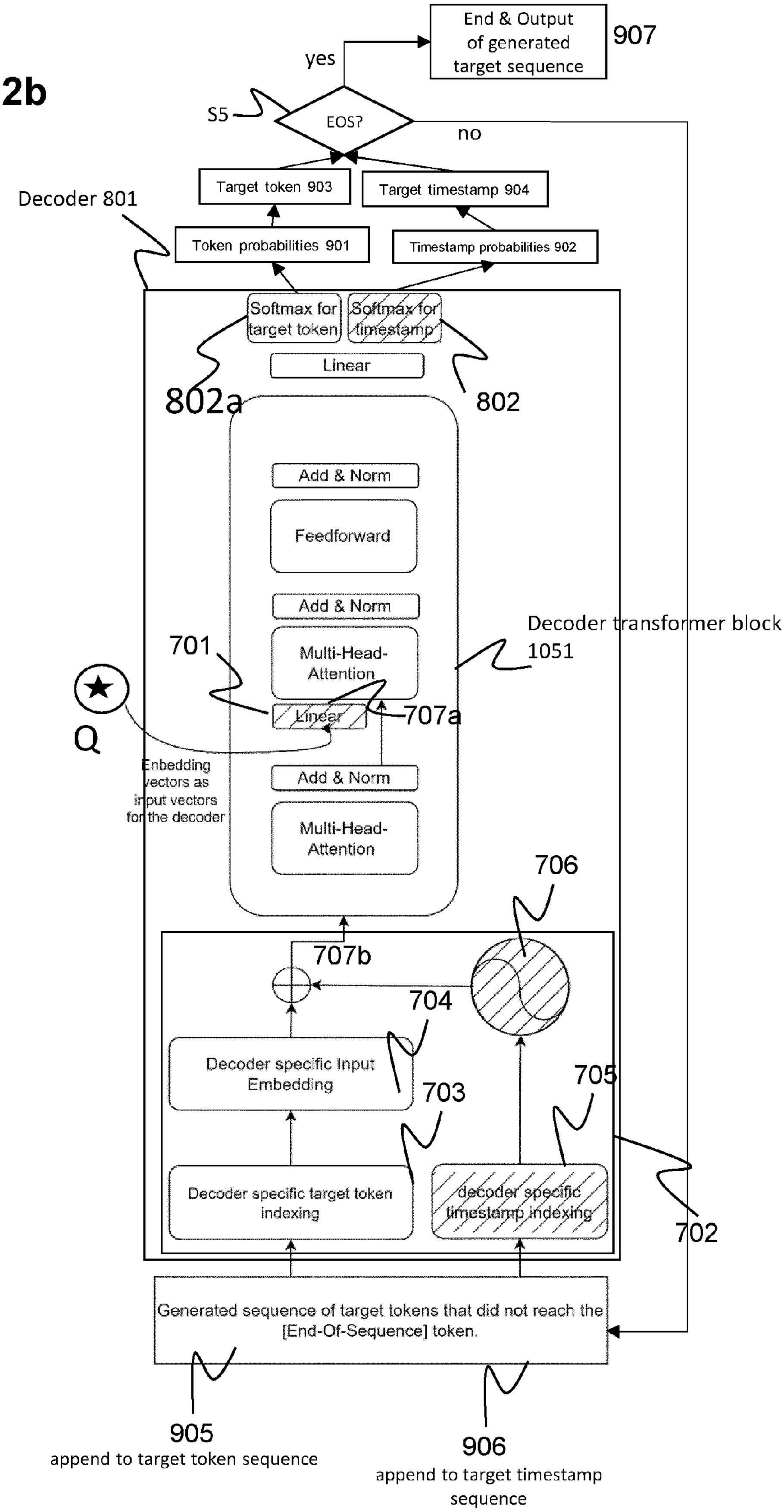
End & Output of generated target sequence
907
yes
S5
EOS?
no
Target token 903
Target timestamp 904
Decoder 801
Token probabilities 901
Timestamp probabilities 902
Softmax for target token
Softmax for timestamp
Linear
802a
802
Add & Norm
Feedforward
Add & Norm
Decoder transformer block 1051
701
Multi-Head-Attention
Linear
707a
Q
Embedding vectors as input vectors for the decoder
Add & Norm
Multi-Head-Attention
706
707b
704
Decoder specific Input Embedding
703
705
Decoder specific target token indexing
decoder specific timestamp indexing
702
Generated sequence of target tokens that did not reach the [End-Of-Sequence] token.
905
append to target token sequence
906
append to target timestamp sequence

Fig. 3

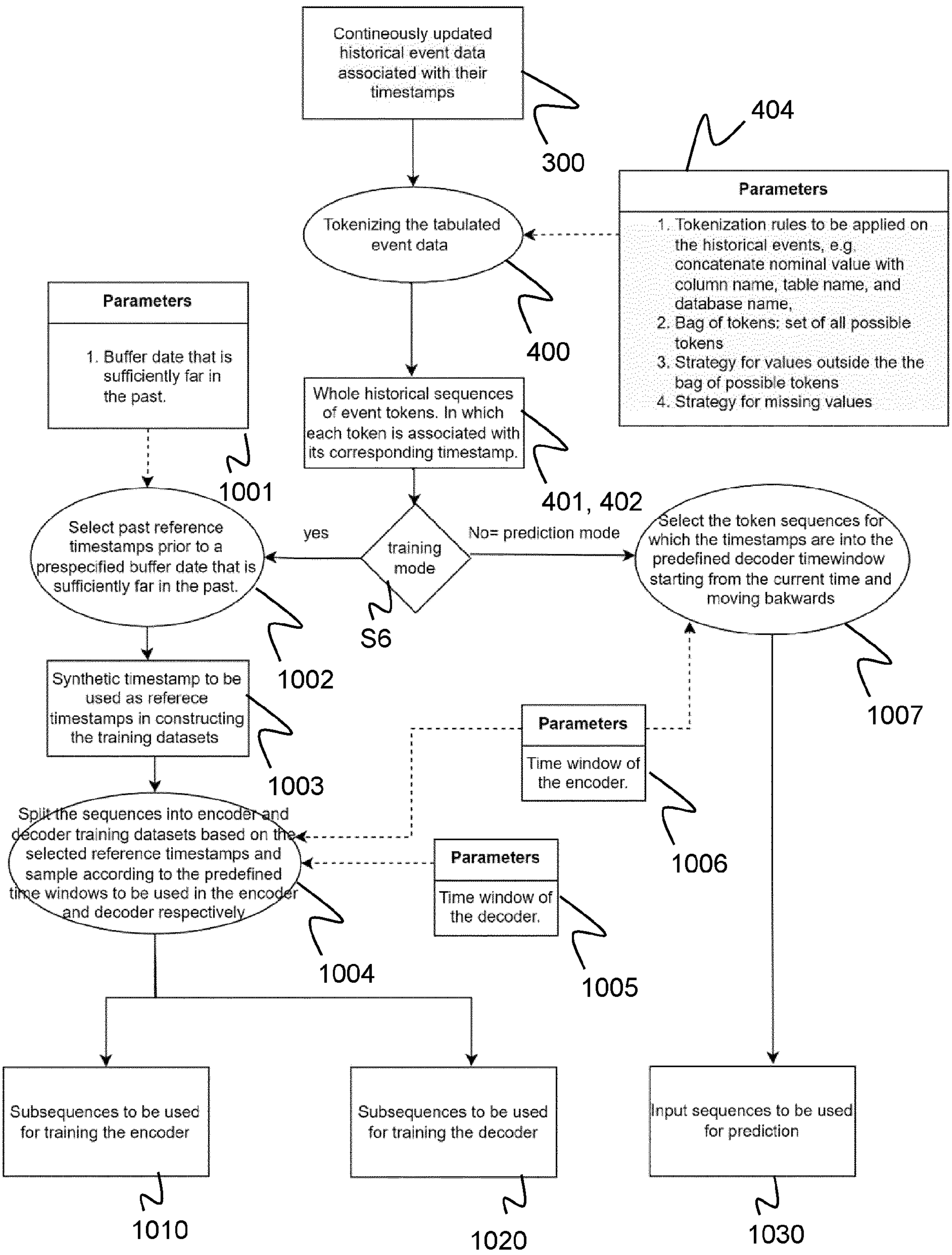
Contineously updated historical event data associated with their timestamps
300
404
Parameters
1. Tokenization rules to be applied on the historical events, e.g. concatenate nominal value with column name, table name, and database name,
2. Bag of tokens: set of all possible tokens
3. Strategy for values outside the the bag of possible tokens
4. Strategy for missing values
Tokenizing the tabulated event data
400
Parameters
1. Buffer date that is sufficiently far in the past.
Whole historical sequences of event tokens. In which each token is associated with its corresponding timestamp.
1001
401, 402
Select past reference timestamps prior to a prespecified buffer date that is sufficiently far in the past.
yes
training mode
No= prediction mode
Select the token sequences for which the timestamps are into the predefined decoder timewindow starting from the current time and moving bakwards
S6
1002
Synthetic timestamp to be used as referece timestamps in constructing the training datasets
1007
Parameters
Time window of the encoder.
1003
Split the sequences into encoder and decoder training datasets based on the selected reference timestamps and sample according to the predefined time windows to be used in the encoder and decoder respectively
Parameters
Time window of the decoder.
1006
1004
1005
Subsequences to be used for training the encoder
Subsequences to be used for training the decoder
Input sequences to be used for prediction
1010
1020
1030

# Fig. 4

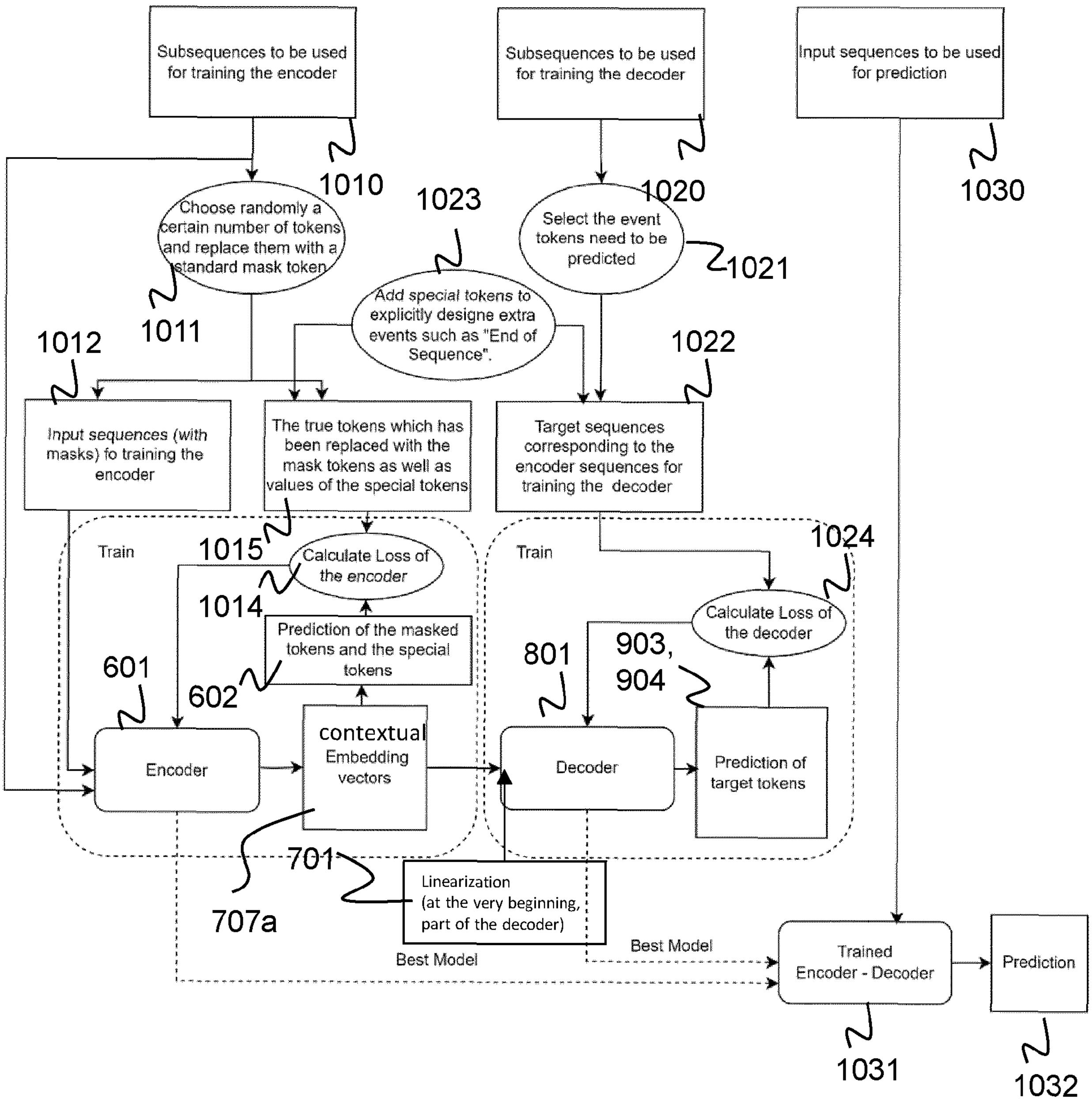
Subsequences to be used for training the encoder
1010
Subsequences to be used for training the decoder
1020
Input sequences to be used for prediction
1030
Choose randomly a certain number of tokens and replace them with a standard mask token
1011
1023
Add special tokens to explicitly designe extra events such as "End of Sequence".
Select the event tokens need to be predicted
1021
1012
1022
Input sequences (with masks) fo training the encoder
The true tokens which has been replaced with the mask tokens as well as values of the special tokens
Target sequences corresponding to the encoder sequences for training the decoder
Train
1015
Calculate Loss of the encoder
1014
Prediction of the masked tokens and the special tokens
601
602
Encoder
contextual Embedding vectors
Train
1024
Calculate Loss of the decoder
801
903, 904
Decoder
Prediction of target tokens
701
707a
Linearization (at the very beginning, part of the decoder)
Best Model
Best Model
Trained Encoder - Decoder
Prediction
1031
1032

Fig. 5

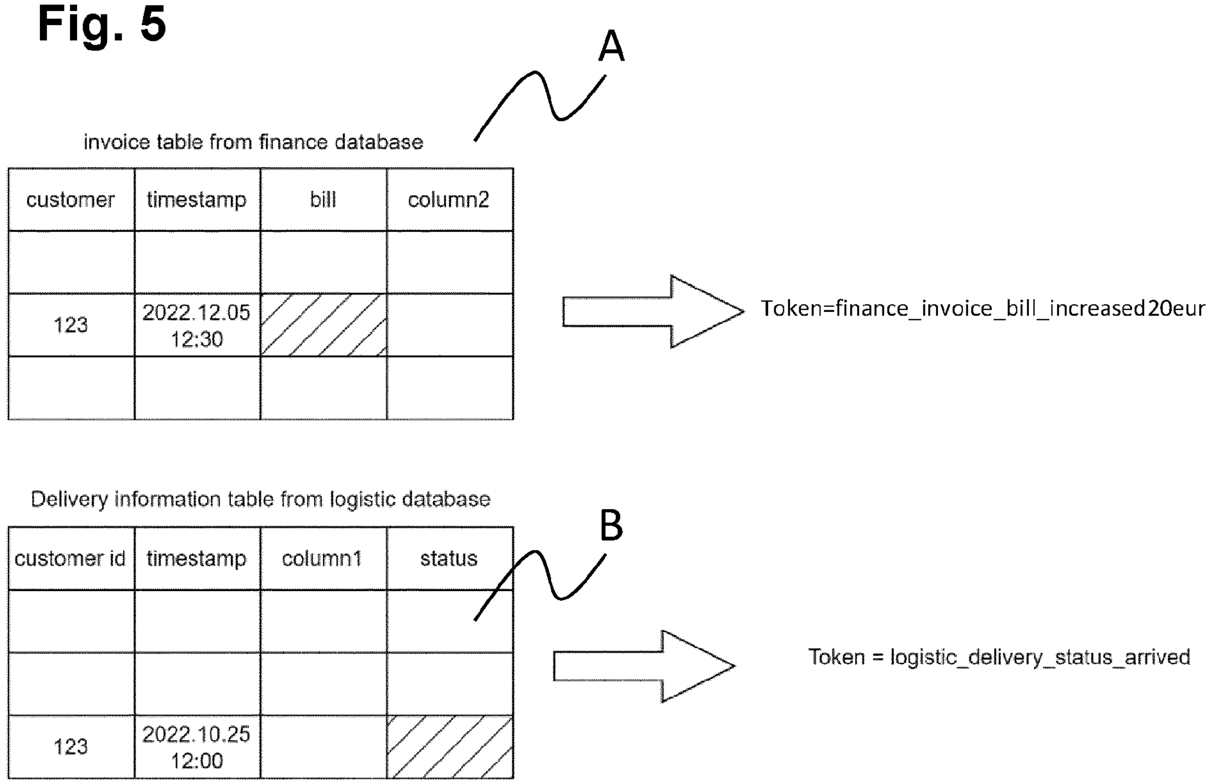
A
invoice table from finance database
customer
timestamp
bill
column2
123
2022.12.05 12:30
Token=finance_invoice_bill_increased20eur
Delivery information table from logistic database
customer id
timestamp
column1
status
B
123
2022.10.25 12:00
Token = logistic_delivery_status_arrived

Fig. 6

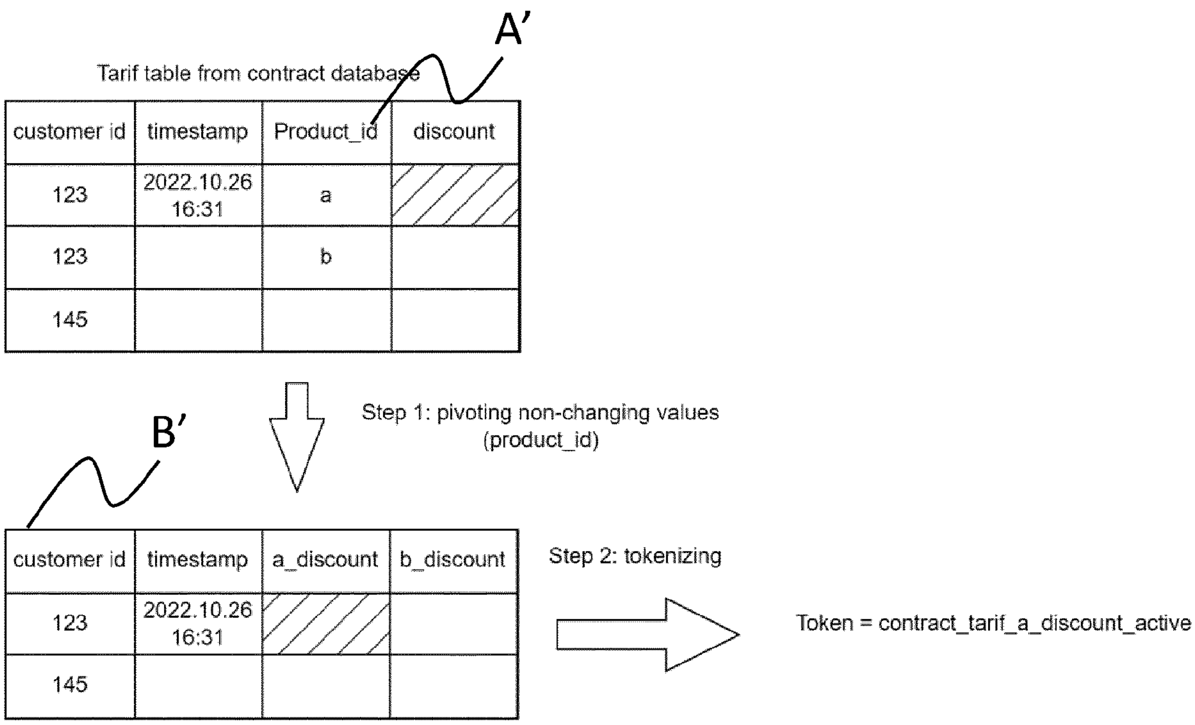
A'
Tarif table from contract database
customer id
timestamp
Product_id
discount
123
2022.10.26 16:31
a
123
b
145
B'
Step 1: pivoting non-changing values (product_id)
customer id
timestamp
a_discount
b_discount
Step 2: tokenizing
123
2022.10.26 16:31
145
Token = contract_tarif_a_discount_active

Fig. 7

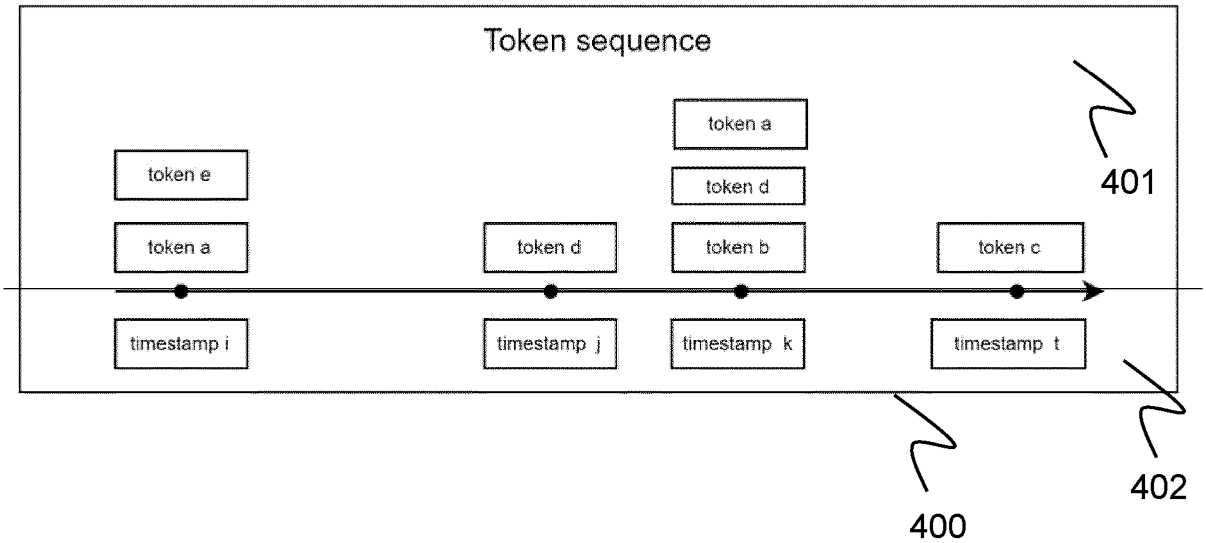
Token sequence
token e
token a
token d
token a
token d
token b
token c
timestamp i
timestamp j
timestamp k
timestamp t
401
402
400

Fig. 8

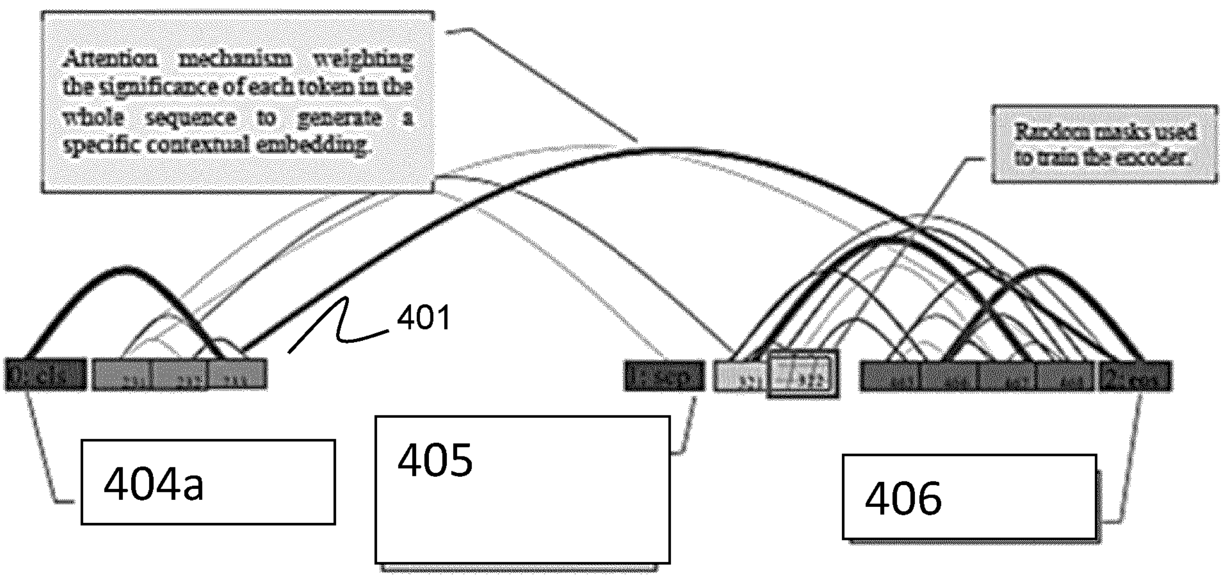
Attention mechanism weighting the significance of each token in the whole sequence to generate a specific contextual embedding.
Random masks used to train the encoder.
401
0: cls
1: sep
2: sep
404a
405
406

Europäisches Patentamt
European Patent Office
Office européen des brevets

# EUROPEAN SEARCH REPORT

Application Number
EP 24 15 1923

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/135659 A1 (WU XIANCHAO [JP]) 4 May 2023 (2023-05-04) * paragraphs [0002] - [0003], [0062] - [0064], [0071], [0075] - [0076], [0091]; figures 1,8 * ----- | 1-13 | INV. G06Q50/50 |
| A | Ed53: "Using transformers for arbitrary sequences (events) and [CLS] embedding", , 13 April 2021 (2021-04-13), XP093168501, Retrieved from the Internet: URL:https://web.archive.org/web/20220808203825/https://discuss.pytorch.org/t/using-transformers-for-arbitrary-sequences-events-and-cls-embedding/118030 [retrieved on 2024-05-29] * the whole document * ----- | 1-13 | |
| | | | TECHNICAL FIELDS SEARCHED (IPC) |
| | | | G06Q |

The present search report has been drawn up for all claims

1

| Place of search | Date of completion of the search | Examiner |
|---|---|---|
| The Hague | 31 May 2024 | Bercan, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 15 1923

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2024

| Patent document cited in search report | Publication date | Patent family member(s) | Publication date |
|---|---|---|---|
| US 2023135659 A1 | 04-05-2023 | CN 116090516 A | 09-05-2023 |
| | | DE 102022128345 A1 | 04-05-2023 |
| | | US 2023135659 A1 | 04-05-2023 |

EPO FORM P0459

For more details about this annex : see Official Journal of the European Patent Office, No. 12/82